# FASCICULE DE BREVET EUROPEEN

(11) **EP 2 755 779 B1**
(45) Date de publication et mention de la délivrance du brevet: **18.11.2015**
(21) Numéro de dépôt: 12759097.4
(22) Date de dépôt: 11.09.2012
(51) Int. Cl.: B21B 45/02

(54) **REUTILISATION D'HUILE USEE DANS UN LAMINOIR**
WIEDERVERWENDUNG VON ALTÖL IN EINEM WALZWERK
REUSE OF USED OIL IN A ROLLING MILL

(30) Priorité: 13.09.2011 BE 201100545
(43) Date de publication de la demande: 23.07.2014
(73) Titulaire: Centre De Recherches Metallurgiques ASBL - Centrum Voor Research In De Metallurgie vzw, 1000 Bruxelles (BE)
(72) Inventeur: VERVAET, Bart, 8790 Waregem (BE); PELLETIER Christophe, 3573 AT Utrecht (NL)
(74) Mandataire: Pronovem
(86) Numéro de dépôt international: PCT/EP2012/067716
(87) Numéro de publication internationale: WO 2013/037760

(56) Documents cités:
- JP-A- 60 206 518
- US-A- 3 817 384

## Description

### Objet de l'invention

La présente invention concerne un procédé de lubrification dans un laminoir. Elle concerne plus particulièrement un procédé de lubrification faisant usage d'huile usée, à savoir d'huile dégradée et/ou contaminée.

### Etat de la technique

Les laminoirs à froid consomment une grande quantité d'huile pour lubrifier le contact entre les rouleaux et le produit en cours de laminage. La lubrification s'effectue à l'aide d'un mélange eau-huile, appelée émulsion, comportant typiquement entre 0,5 et 4% d'huile dans l'eau.

L'émulsion circule généralement en circuit fermé comme c'est, par exemple, illustré dans les documents JP 56-041011, JP 6-246330 ou à la figure 1. Au sein du circuit, l'émulsion est collectée, traitée à l'aide de filtres et d'écumoires (*oil skimmer*) et ensuite renvoyée au laminoir. En cours d'utilisation, de l'huile fraîche est mélangée à l'émulsion recyclée pour maintenir la concentration en huile constante. US 3 817 384 divulgue un procédé de lubrification dans un laminoir à froid à l'aide d'un lubrificant comprenant une huile usée.

Au fil du temps, l'émulsion se dégrade et/ou est contaminée par des fines de fer, par la présence de micro-organismes, par de l'acide issu des lignes préalables de décapage, par des huiles utilisées dans d'autres parties du laminoir, etc. En conséquence, une partie ou la totalité de l'émulsion doit être vidangée et entreposée dans une cuve à déchets avant d'être traitée ultérieurement dans un centre spécialisé. Cela engendre une quantité significative de déchets. Les déchets issus du procédé de lubrification incluent non seulement les émulsions vidangées mais également les boues huileuses qui se sont déposées dans les filtres, sur les équipements ainsi que l'huile issue de la filtration des huiles écumées.

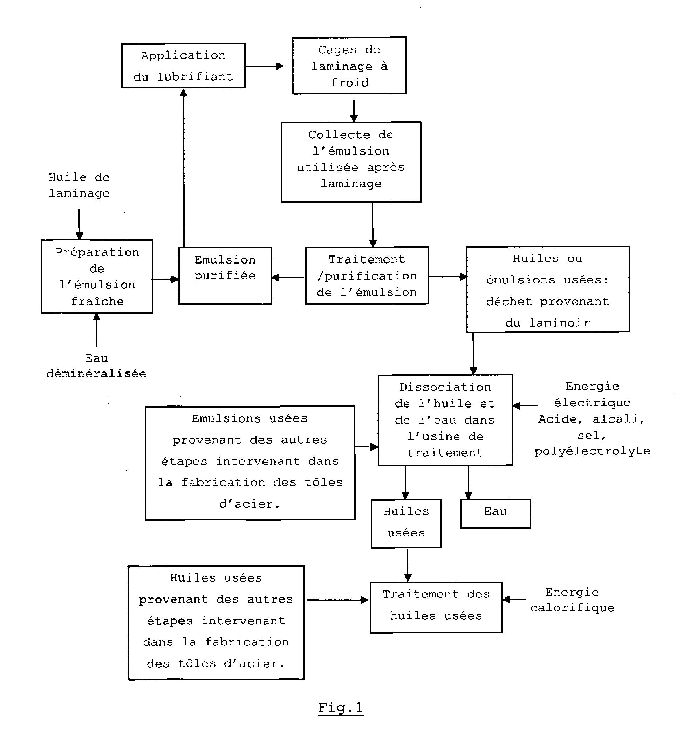

Actuellement, les émulsions usées sont généralement déshuilées dans une usine de séparation d'émulsion et/ou dissociées en huile et en eau (voir fig. 1). Lors du stockage des déchets, les émulsions usées provenant du laminage peuvent être aussi mélangées à d'autres émulsions usées utilisées dans n'importe quelle autre étape intervenant dans la fabrication des tôles d'acier. Les huiles dissociées sont ensuite envoyées dans une usine de purification où elles sont évaporées. Ces huiles dissociées peuvent être mélangées, avant la purification, avec d'autres huiles usées, utilisées lors de la fabrication des tôles d'acier. Ces huiles peuvent ensuite être brûlées, par exemple, dans les hauts-fourneaux d'une usine sidérurgique.

La gestion de ces déchets et leur traitement engendrent des coûts qui sont très importants et qui pourraient être réduits grâce à la réutilisation des déchets au sein du procédé de laminage, que ce soit le laminage à chaud ou à froid.

### Buts de l'invention

La présente invention vise à fournir une solution qui permettre de réutiliser les émulsions usées, les boues huileuses et les huiles usagées au sein du procédé de laminage et, en particulier, du procédé de laminage à chaud.

Elle vise ainsi à réduire la quantité de déchets produits et les coûts associés à leur gestion et traitement.

### Principaux éléments caractéristiques de l'invention

La présente invention se rapporte à un procédé de lubrification dans un laminoir à chaud, selon la revendication 1.

Selon des modes particuliers de l'invention, le procédé comporte au moins une ou une combinaison appropriée des caractéristiques suivantes:
- ladite huile usée est issue d'un déchet ou d'un mélange de déchets provenant d'une ou plusieurs des étapes intervenant dans la fabrication d'un métal;
- le déchet comporte une émulsion usée, une boue huileuse ou une huile usagée;
- l'émulsion usée et la boue huileuse sont traitées à l'aide d'une technique de séparation afin d'extraire ladite huile usée;
- ladite huile usée est prélevée dans une couche surnageant au-dessus de la phase aqueuse de l'émulsion usée;
- l'huile usée prélevée dans la couche surnageant au-dessus de la phase aqueuse de l'émulsion usée est réutilisée comme lubrifiant dans un laminoir à chaud sans subir de traitement de purification;
- l'émulsion usée est au préalable mélangée avec d'autres déchets;
- le lubrifiant comporte un mélange d'huile usée et d'eau;
- le mélange comporte un émulsifiant;
- le lubrifiant comporte l'huile usée non mélangée avec de l'eau;
- le déchet est issu d'un procédé de lubrification dans un laminoir à froid ou d'un procédé de décapage avant le laminoir à froid;
- il résulte en une réduction de force de l'ordre de 30% lors du laminage à chaud d'une tôle d'acier.

### Brève description des figures

La figure 1 représente schématiquement le cycle complet de l'émulsion, selon l'état de l'art, dans un laminoir à froid.

La figure 2 représente la réduction de force résultant de la lubrification d'une cage de laminage à chaud à l'aide de différents lubrifiants dont une référence et ceux selon l'invention.

### Description détaillée de l'invention

La présente invention se rapporte à un procédé de lubrification d'un laminoir à l'aide d'un lubrifiant comprenant une huile usée, qu'on appellera aussi huile usagée. Préférentiellement, l'huile usée selon l'invention est réutilisée dans un laminoir à chaud nécessitant une qualité d'huile moindre que celle d'un laminoir à froid. Cependant, la présente invention n'exclut pas la réutilisation d'huile usagée dans un laminoir à froid.

L'expression huile usée désigne, plus particulièrement, une huile qui est dégradée et/ou contaminée et qui, en l'état, n'a plus les propriétés requises pour une lubrification optimale d'un laminoir à froid même après filtration et apport d'huile fraîche. Elle se différencie ainsi d'une huile/émulsion recyclée au sein d'une boucle fermée telle que décrite dans les documents JP 56-041011 et JP 6-246330 de l'état de la technique.

L'expression huile usée inclut également une huile dégradée et/ou contaminée telle que définie ci-dessus ayant en outre subi un ou plusieurs traitements avant sa réutilisation.

Le caractère dégradé et/ou contaminé d'une huile dépend du domaine d'application et n'est pas aisé à définir de manière universelle. Dans le cas d'un laminoir à froid, l'émulsion est minutieusement contrôlée. Il peut être décidé de vidanger l'émulsion sur la base de plusieurs critères qui sont entre autres une modification du pH de l'émulsion, de la stabilité de l'émulsion, de la taille des particules de l'émulsion, de la viscosité de l'huile, des forces de laminage, etc. Chaque laminoir a sa propre fenêtre de fonctionnement. Il est en conséquence délicat de quantifier l'usure d'une huile sans indûment limiter la portée de l'invention.

L'huile usée peut être issue de boues huileuses, d'une émulsion usée, et/ou, plus simplement, d'une huile usagée, qu'on appellera toutes trois communément déchets. Ces déchets peuvent être issus d'un procédé de lubrification d'un laminoir à froid et/ou de toute autre étape intervenant dans la fabrication d'un métal, et plus particulièrement dans la fabrication de tôles d'acier (décapage, bobinage, etc.). La présente invention s'étend également à l'utilisation d'huile usée issue d'autres applications (friteries, huile de vidange de moteur, etc.). L'huile usée peut ainsi être obtenue à partir d'un mélange d'huiles issues de plusieurs sources de déchets.

Les huiles usées peuvent être extraites des boues ou des émulsions usées à l'aide de technique de séparation choisies selon la composition des déchets et la qualité d'huile requise pour l'application. Plus simplement, la séparation peut s'effectuer naturellement au sein de la cuve par déstabilisation de l'émulsion au repos. Ainsi, dans la cuve à déchets, l'huile usée vient former une couche surnageant au-dessus de la phase aqueuse et peut être directement prélevée.

A titre d'exemple non limitatif, le procédé de lubrification selon l'invention est illustré ci-dessous pour un laminoir à chaud mais comme déjà mentionné, le procédé selon l'invention peut s'appliquer également sur un laminoir à froid.

Deux huiles usées et issues de la lubrification dans un laminoir à froid industriel de tôles d'acier, et mélangées avec des huiles de conservation usagées utilisées sur les lignes de décapage, ont été testées dans un laminoir à chaud pilote et comparées avec une huile de référence fraîche. Les essais ont porté sur le laminage d'un métal ferreux, à savoir l'acier. Les deux huiles usagées ont été prélevées dans la couche supérieure qui s'est formée dans la cuve à déchets par déstabilisation de l'émulsion eau/huile. Elles comportent moins de 0.5% d'eau et n'ont subi aucun traitement de purification avant réutilisation. Les deux huiles usagées sont issues de la même cuve et présentent des variations de couleurs (brun très foncé et brun foncé contre brun très clair pour une huile fraîche) qui traduisent des variations de compositions et/ou de concentrations en émulsifiant au sein de la couche en suspension.

Tout d'abord, les émulsions ont été préparées avec une concentration d'1% en huile à l'aide d'un mélangeur. Les propriétés de mélange de l'huile et de l'eau sans ou avec un émulsifiant ont été évaluées. La concentration en émulsifiant dans les mélanges comprenant celui-ci s'élève à 2%. Les essais ont montré que les deux huiles usagées présentent des aptitudes à se mélanger dans l'eau différentes. Ainsi, pour une première huile usée, appelée « déchet 1 », le mélange s'effectue difficilement en l'absence d'émulsifiant, alors qu'en présence d'un émulsifiant, le mélange s'effectue bien. Dans le cas de la seconde huile usée, appelée « déchet 2 », de bonnes propriétés de mélange sont observées que ce soit avec ou sans émulsifiant. En parallèle, comme référence, une émulsion avec 1% d'huile fraîche a été préparée.

Les émulsions préparées ont été pulvérisées sur les rouleaux de laminage avec des pressions de 3 et 7 bars donnant respectivement un débit d'émulsion de 31/min et 4.751/min.

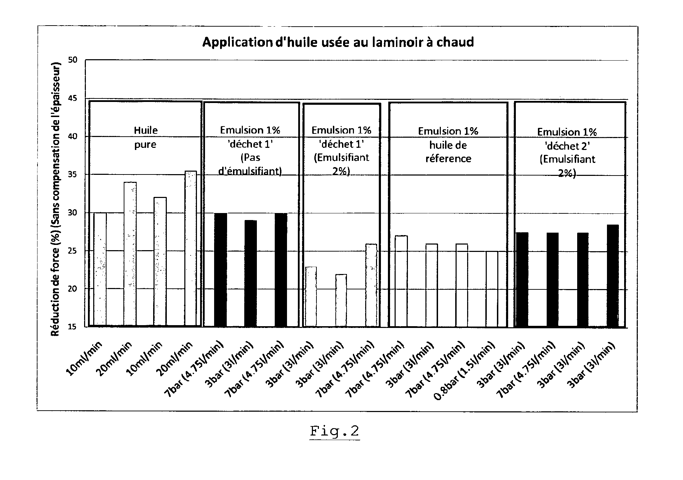

La figure 2 représente le pourcentage moyen de réduction de force pour les différentes émulsions testées par rapport à un essai de laminage effectué sans lubrification toutes autres choses étant égales par ailleurs. On observe une réduction de force qui peut atteindre 30% avec l'huile usée, appelée « déchet 1 », et peut être supérieure à celle obtenue avec l'huile de référence. On observe en outre que l'addition d'émulsifiant tend à réduire les performances de lubrification.

Des essais additionnels ont été effectués avec de l'huile usée pure, c'est-à-dire non dispersée dans de l'eau. L'huile pure a été pulvérisée avec des débits de 10 et 201/min sur les rouleaux de laminage, selon, par exemple, la méthode décrite dans le document WO 2009/046505. Les résultats de ces essais sont également présentés à la figure 2. On observe une réduction de force supérieure ou égale à 30%.

La présente invention a été illustrée pour le laminage de métaux ferreux. Le procédé de lubrification selon l'invention utilisant de l'huile usée peut être étendu à la lubrification dans le cadre du laminage de métaux non ferreux.

## Revendications

1. Procédé de lubrification dans un laminoir à chaud à l'aide d'un lubrifiant comprenant une huile usée, ladite huile usée étant issue au moins en partie d'un déchet provenant d'un laminoir à froid.

2. Procédé selon la revendication 1, **caractérisé en ce que** ladite huile usée est issue d'un déchet ou d'un mélange de déchets provenant d'une ou plusieurs des étapes intervenant dans la fabrication d'un métal.

3. Procédé selon la revendication 1 ou 2, **caractérisé en ce que** le déchet comporte une émulsion usée, une boue huileuse ou une huile usagée.

4. Procédé selon la revendication 3, **caractérisé en ce que** l'émulsion usée et la boue huileuse sont traitées à l'aide d'une technique de séparation afin d'extraire ladite huile usée.

5. Procédé selon là revendication 3, **caractérisé en ce que** ladite huile usée est prélevée dans une couche surnageant au-dessus de la phase aqueuse de l'émulsion usée.

6. Procédé selon la revendication 5, **caractérisé en ce que** l'huile usée prélevée dans la couche surnageant au-dessus de la phase aqueuse de l'émulsion usée est réutilisée comme lubrifiant dans un laminoir à chaud sans subir de traitement de purification.

7. Procédé selon l'une quelconque des revendications précédentes, **caractérisé en ce que** le lubrifiant comporte un mélange d'huile usée et d'eau.

8. Procédé selon la revendication 7, **caractérisé en ce que** le mélange comporte un émulsifiant.

9. Procédé selon l'une quelconque des revendications 1 à 6, **caractérisé en ce que** le lubrifiant comporte l'huile usée non mélangée avec de l'eau.

10. Procédé selon l'une quelconque des revendications précédentes, **caractérisé en ce qu'**il résulte en une réduction de force de l'ordre de 30% lors du laminage à chaud d'une tôle d'acier.

## Patentansprüche

1. Schmierverfahren in einem Warmwalzwerk mit Hilfe eines Schmiermittels, das ein Altöl umfasst, wobei das Altöl mindestens teilweise aus einem Abfall eines Kaltwalzwerks stammt.

2. Verfahren nach Anspruch 1, **dadurch gekennzeichnet, dass** das Altöl aus einem Abfallprodukt oder einem Abfallgemisch aus einem oder mehreren Schritten der Herstellung eines Metalls stammt.

3. Verfahren nach Anspruch 1 oder 2, **dadurch gekennzeichnet, dass** der Abfall eine verbrauchte Emulsion, einen Ölschlamm oder ein verbrauchtes Öl aufweist.

4. Verfahren nach Anspruch 3, **dadurch gekennzeichnet, dass** die verbrauchte Emulsion und der Ölschlamm einer Trenntechnik unterzogen werden, um das Altöl zu extrahieren.

5. Verfahren nach Anspruch 3, **dadurch gekennzeichnet, dass** das Altöl aus einer Schicht entnommen wird, die über der wässerigen Phase der verbrauchten Emulsion schwimmt.

6. Verfahren nach Anspruch 5, **dadurch gekennzeichnet, dass** das Altöl, das aus der Schicht, die über der wässerigen Phase der verbrauchten Emulsion schwimmt, entnommen wurde, ohne Reinigungsbehandlung als Schmiermittel in einem Warmwalzwerk wiederverwendet wird.

7. Verfahren nach irgendeinem der vorangehenden Ansprüche, **dadurch gekennzeichnet, dass** das Schmiermittel ein Gemisch aus Altöl und Wasser aufweist.

8. Verfahren nach Anspruch 7, **dadurch gekennzeichnet, dass** das Gemisch einen Emulgator aufweist.

9. Verfahren nach irgendeinem der Ansprüche 1 bis 6, **dadurch gekennzeichnet, dass** das Schmiermittel das Altöl, das nicht mit Wasser gemischt ist, aufweist.

10. Verfahren nach irgendeinem der vorangehenden Ansprüche, **dadurch gekennzeichnet, dass** eine Kraftreduzierung von zirka 30 % beim Warmwalzen eines Stahlblechs daraus erhalten wird.

## Claims

1. A lubrication method in a hot-rolling mill by means of a lubricant comprising used oil, said used oil stemming at least partly from waste coming from a cold-rolling mill.

2. The method according to Claim 1, **characterized in that** said used oil stems from waste or from a mixture of wastes from one or several of the steps occurring in the manufacturing of a metal.

3. The method according to Claim 1 or 2, **characterized in that** the waste comprises a used emulsion, an oily sludge or a waste oil.

4. The method according to Claim 3, **characterized in that** the used emulsion and the oily sludge are treated by means of a separation technique in order to extract said used oil.

5. The method according to Claim 3, **characterized in that** said used oil is taken from a supernatant layer above the aqueous phase of the used emulsion.

6. The method according to Claim 5, **characterized in that** the used oil taken from the supernatant layer above the aqueous phase of the used emulsion is reused as a lubricant in a hot-rolling mill without being subjected to any purification treatment.

7. The method according to any of the preceding claims, **characterized in that** the lubricant comprises a mixture of used oil and of water.

8. The method according to Claim 7, **characterized in that** the mixture comprises an emulsifier.

9. The method according to any of Claims 1 to 6, **characterized in that** the lubricant comprises the used oil not mixed with water.

10. The method according to any of the preceding claims, **characterized in that** it results in a force reduction of the order of 30% during hot-rolling of a steel sheet.
